(19) **Europäisches Patentamt European Patent Office Office européen des brevets**

(11) **EP 3 002 846 B1**

(12) **EUROPEAN PATENT SPECIFICATION**

(45) Date of publication and mention of the grant of the patent:
**20.02.2019 Bulletin 2019/08**

(51) Int Cl.:
***H02J 3/00*** *(2006.01)*

(21) Application number: **14187096.4**

(22) Date of filing: **30.09.2014**

(54) **Method, controller, and computer program product for controlling a voltage in a power grid**

Verfahren, Steuerung und Computerprogrammprodukt zur Steuerung einer Spannung in einem Stromnetz

Procédé, contrôleur et produit de programme informatique permettant de commander une tension dans un réseau électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.04.2016 Bulletin 2016/14**

(73) Proprietor: **Siemens Aktiengesellschaft 80333 München (DE)**

(72) Inventors:
• **Münz, Ulrich 81673 München (DE)**
• **Sollacher, Rudolf 84174 Eching (DE)**

(56) References cited:
• **Anonymous: "Slack bus - Wikipedia, the free encyclopedia", , 9 September 2014 (2014-09-09), XP055165601, Retrieved from the Internet: URL:http://en.wikipedia.org/wiki/Slack_bus [retrieved on 2015-01-28]**
• **Chanwit Boonchuay ET AL: "Robust optimization-based DC optimal power flow for managing wind generation uncertainty", AIP CONFERENCE PROCEEDINGS, 1 January 2012 (2012-01-01), pages 31-35, XP055460910, NEW YORK, US ISSN: 0094-243X, DOI: 10.1063/1.4768966**

**Description**

In contemporary power grids for transmission and/or distribution of electrical power it becomes increasingly complex to control the voltage of the various buses of the power grid. This is at least partially due to the increase of renewable power supply, which leads to faster power flow variations and reverse power flow from distribution grids to transmission grids.

Usually, a voltage control has to fulfill several requirements. First, the voltage of PQ buses, i.e. buses where the voltage cannot be controlled directly, should be within predetermined voltage limits. Examples for PQ buses are load buses or buses with renewable power supply. Second, the voltage of PV buses, i.e. buses where the voltage level can be controlled directly, should be close to a nominal voltage value. Examples for PV buses are generator buses with conventional generators or buses with on-load tap changer (OLTC) transformers, reactive power compensators, flexible AC transmission systems (FACTS), or DC power grid terminals. These requirements should be fulfilled even in case of fast power variations of e.g. a renewable power supply. Hence, the voltage control should allow for a fast re-optimization after significant power flow variations, even for large power grids.

Known methods for voltage control in a power grid include methods based on numerically solving a set of nonlinear power flow equations, which combine values for active powers, reactive powers, voltage amplitudes and phase angles of the PV buses and the PQ buses of the power grid. It is known to solve these power flow equations for the voltage amplitudes at the PQ buses by inputting the values for the active and reactive power supply and demand at the PQ buses and the active power supply and demand and voltage amplitude at the PV buses. These input values are measured or estimated, e.g. based on predetermined load profiles. According to known methods the optimal voltage levels at the PV buses are not determined directly but rather by an iterative solution of the power flow equations for different voltage levels. This often implies time consuming calculations. Furthermore, the dependence on estimated or varying values for the active and reactive power supply and demand leads to a significant increase of numerical complexity.

Document Chanwit Boonchuay ET AL: "Robust optimization-based DC optimal power flow for managing wind generation uncertainty", AIP CONFERENCE PROCEEDINGS, 1 January 2012 (2012-01-01), pages 31-35, XP055460910, NEW YORK teaches to carry out a power flow calculation in a power grid in which, based on known power grid parameters (input parameters), unknown power grid parameters (output parameters) are calculated. Further, it is disclosed to apply a robust optimization to said power flow calculation, i.e. to consider uncertainty in the input parameters of the power flow calculation.

It is an object of the present invention to provide a method, a controller, and a computer program product for controlling a voltage in a power grid that are more flexible in particular in cases of varying or uncertain power flows.

This object is achieved by a method according to patent claim 1, a controller according to patent claim 10, and a computer program product according to patent claim 11. According to the invention, a method, a controller, and a computer program product for controlling a voltage in a power grid comprising a PV bus and a PQ bus are provided. The controller and/or the computer program product may be central instances for the power grid or distributed over several communicating instances. A first tolerance range for an active power of the PV bus and a second tolerance range for an active power of the PQ bus are received. Here, the tolerance ranges may be represented as intervals defined by minimum and maximum values of the respective quantities. Furthermore, a first value for a reactive power of the PQ bus is received. With that, a robust optimization process is run by a processor for a set of power flow equations combining values for active powers, reactive powers, and voltages of the PV bus and the PQ bus.

Robust optimization methods are a particular class of optimization methods allowing for uncertain parameters. They specifically allow the optimization of first quantities satisfying given constraints for a whole domain of uncertain second quantities. The constraints are often denoted as robust optimization constraints and the domain of uncertain second quantities is often denoted as uncertainty or robust optimization uncertainty.

According to the invention the first and second tolerance range and the first reactive power value are input to the robust optimization process using the first and second tolerance range as robust optimization uncertainty. With that, the robust optimization process determines a voltage set point for the PV bus so that the set of power flow equations is fulfilled for the first and second tolerance range. According to the determined voltage set point a voltage at the PV bus is controlled.

Because the invention uses tolerance ranges for a robust optimization process instead of given or estimated power grid parameters, the voltage set point can be determined in compliance with the tolerance ranges even if a power supply and/or consumption is not known precisely or shows fast variations. In particular, the invention allows a fast and flexible determination and optimization of the voltage set point, thus allowing an efficient voltage control of the PV bus with a short reaction time.

Particular embodiments of the invention are given by the dependent claims.

According to the present invention, a third tolerance range for a voltage of the PQ bus is received and input to the robust optimization process as a robust optimization constraint. With that, the voltage set point is determined so that the robust optimization constraint is satisfied for the first and second tolerance range.

According to a further embodiment a nominal value for a voltage of the PQ bus may be received and input to the robust optimization process taking a difference between the nominal value and an actual voltage of the PQ bus into account in a robust optimization cost function. With that, the voltage set point may be determined so that the robust optimization cost function is minimized for the first and second tolerance range.

According to an advantageous embodiment of the invention a deviation of the voltage set point from a nominal voltage of the PV bus may be minimized by the robust optimization process. This allows minimizing fluctuations of the voltage at the PV bus, thus enhancing voltage stability.

According to an embodiment of the invention the first tolerance range may be received from a conventional power generator or a high voltage direct current (HVDC) terminal at the PV bus. Furthermore, the second tolerance range and the first reactive power value may be received from a renewable power generator or a load device at the PQ bus.

Moreover, the voltage set point may be transmitted to a conventional power generator, a high voltage direct current terminal, and/or a flexible AC transmission system, e.g. a static VAR compensator, at the PV bus.

Advantageously, the set of power flow equations may comprise a linearized power flow equation.

For a transmission grid the linearization of the linearized power flow equation may be based on neglecting a resistance of a power line of the transmission grid compared to an inductivity of the power line. Furthermore, a phase angle difference between neighboring buses may be linearized.

For a distribution grid the linearization of the linearized power flow equation may be based on neglecting a deviation of a voltage value from a nominal voltage of the PV bus or PQ bus compared to a voltage difference between neighboring buses. Moreover, a phase angle difference between neighboring buses may be linearized.

With the above linearizations the power flow equations can be simplified considerably. This allows a fast and stable numerical solution even in case of a very large power grid.

Moreover, the robust optimization process may be a linear robust optimization process based on a linear programming routine. Linear programming routines allow a particular fast and stable numerical solution of constrained optimization problems. Furthermore, the robust optimization process can be efficiently distributed over several processors.

Particular embodiments of the invention are described in the following paragraphs in conjunction with the drawings.

The drawings show in schematic representation:

Figure 1     a power grid with several PV buses and several PQ buses, and

Figure 2     a branch model representing a connection between two buses.

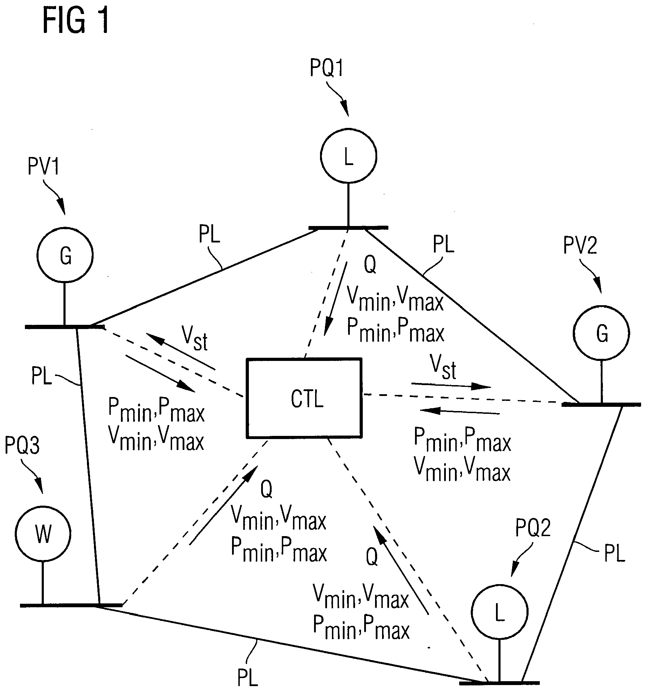

Figure 1 a depicts an exemplary embodiment of a power grid with several PV buses PV1, PV2 and several PQ buses PQ1, PQ2, and PQ3 in schematic representation. According to that embodiment, the PV buses PV1 and PV2 are generator buses with conventional power generators G. One of the PV buses PV1 or PV2 may be treated as a slack bus for computation purposes. Furthermore, the PQ buses PQ1 and PQ2 are load buses with load devices L while the PQ bus PQ3 is a bus with a renewable power supply W, e.g. a wind generator. The PV buses PV1 and PV2 and the PQ buses PQ1,...,PQ3 are connected by power lines PL.

For controlling voltages of the conventional power generators G of the PV buses PV1 and PV2 a controller CTL is provided in the power grid. The controller CTL is coupled to the PV buses PV1 and PV2 as well as to the PQ buses PQ1,...,PQ3 as indicated by dashed lines in figure 1.

From each of the buses PV1, PV2, PQ1,...,PQ3, the controller CTL receives a minimum value $P_{min}$ and a maximum value $P_{max}$ for the active power supplied or consumed by the respective power generator or load device of the respective bus. Furthermore, the controller CTL receives from each of the buses PV1, PV2, PQ1,...,PQ3 a minimum value $v_{min}$ and a maximum value $v_{max}$ for a voltage of the respective bus. The minimum and maximum values $v_{min}$ and $v_{max}$ may alternatively provided by a grid code of the power system. For each bus, the values $P_{min}$ and $P_{max}$ specify a tolerance range for the active power of that bus and the values $v_{min}$ and $v_{max}$ specify a tolerance range for the voltage of that bus.

Moreover, the controller CTL receives from each of the PQ buses PQ1,...,PQ3 a value Q for the reactive power of the respective PQ bus. This reactive power value Q may also be a vector, in particular a pair of parameters denoting a range, in particular a tolerance range for the reactive power of the respective PQ bus. The latter may be the case when controlling the voltage of PV buses in distribution grids according to the second embodiment described below.

The controller CTL inputs the received tolerance ranges specified by the $P_{min}$, $P_{max}$, $v_{min}$, and $v_{max}$ for each bus and the received reactive power values Q for the PQ buses into a robust optimization process for a set of power flow equations as described in detail below. The robust optimization process outputs a respective optimized voltage set point $v_{st}$ for each of the PV buses PV1 and PV2 so that the robust optimization constraints are satisfied. Each of the respective voltage set points $v_{st}$ is transmitted to the respective power generator G of the respective PV bus PV1 or PV2 in order to control their voltages.

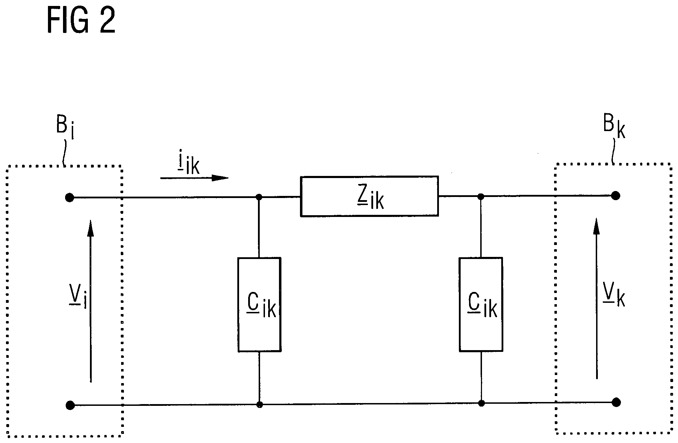

A common network model of a power grid represents a power line between two power grid buses $B_i$ and $B_k$ by a complex series impedance $\underline{z}_{ik} = r_{ik} + j*x_{ik}$ and complex shunt admittance $\underline{c}_{ik} = j*b_{ik}$, the latter being equally split between adjacent buses. Here and in the following the imaginary unit is denoted by "j". Figure 2 shows a schematic representation of a line or branch model with complex node voltages $\underline{v}_i = v_i*\exp(j*\theta_i)$ at bus $B_i$ and $\underline{v}_k = v_k*\exp(j*\theta_k)$ at bus $B_k$ and complex current $\underline{i}_{ik} = (\underline{v}_i-\underline{v}_k)/\underline{z}_{ik}$ flowing from bus $B_i$ to adjacent bus $B_k$.

Here, $\theta_i$ and $\theta_k$ denote the phases of the voltages $\underline{v}_i$ and $\underline{v}_k$ at the buses $B_i$ and $B_k$, respectively. The $r_{ik}$, $x_{ik}$, $b_{ik}$, $v_i$, $v_k$, $\theta_1$, and $\theta_k$ are considered real, while the $\underline{z}_{ik}$, $\underline{v}_i$, $\underline{v}_k$, and $\underline{c}_{ik}$ are considered complex quantities. In the following, the buses $B_i$ and $B_k$ are often denoted by their index i or k, respectively.

The apparent power $S_{ik}$ flowing from bus i bus to bus k is given by:

$$S_{ik} = P_{ik} + j*Q_{ik} = \underline{v}_i * \underline{i}_{ik}^{*}, \tag{1}$$

where the raised "*" denotes complex conjugation.

This leads to the known AC, i.e. alternating current, power flow equations for a power grid with N buses:

$$S_i = P_i + jQ_i = \sum_{k \in \mathcal{N}_i} S_{ik} = \sum_{k \in \mathcal{N}_i} \left[ \frac{v_i(v_i^* - v_k^*)}{z_{ik}^*} - \frac{v_i v_i^* j b_{ik}}{2} \right] \tag{2a}$$

$$P_i = \sum_{k \in \mathcal{N}_i} \left[ v_i^2 \frac{r_{ik}}{r_{ik}^2 + x_{ik}^2} - \frac{v_i v_k}{r_{ik}^2 + x_{ik}^2} (r_{ik}\cos(\theta_i - \theta_k) - x_{ik}\sin(\theta_i - \theta_k)) \right] \tag{2b}$$

$$Q_i = \sum_{k \in \mathcal{N}_i} \left[ v_i^2 \left( \frac{x_{ik}}{r_{ik}^2 + x_{ik}^2} - \frac{b_{ik}}{2} \right) - \frac{v_i v_k}{r_{ik}^2 + x_{ik}^2} (x_{ik}\cos(\theta_i - \theta_k) + r_{ik}\sin(\theta_i - \theta_k)) \right]$$

$$\tag{2c}$$

The power flow equations are a set of nonlinear equations combining characteristic quantities of the power grid. Here, the sum includes all neighboring buses k connected to bus i by a power line. $S_i$, $P_i$, and $Q_i$ denote the net apparent power, active power and reactive power, respectively, generated at bus i.

There are three types of buses

- slack bus s: with $v_s = 1$ and $\theta_s = 0$, provides the missing active power and reactive power in order to balance the power flow equations (s denotes the index of the slack bus),
- PV bus i: with $P_i = P^*_i$ and $v_i = v^*_i$ for given $P^*_i$, $v^*_i$, (typically a generator bus), and
- PQ bus k: with $P_k = P^*_k$ and $Q_k = Q^*_k$ for given $P^*_k$, $Q^*_k$, (typically a load bus).

Usually, a power grid contains a number of generator buses, all of which are PV buses except for one which is the slack bus. Typically, all load buses are PQ buses.

According to prior art, the power flow equations are usually solved to provide a solution on Q, $\theta$ for the PV buses with P*, v* given and v, $\theta$ for the PQ buses with P*, Q* given. Here, Q, $\theta$, P*, v*, v, $\theta$, P*, Q* denote the vectors of the corresponding indexed quantities.

With the present invention, in contrast, the following question is considered:

Given a power grid with one slack bus, $N_G$-1 PV buses, and $N_L$ PQ buses with uncertain active power loads or generators $P_{*n}$ with $P_{*n\,min} <= P^*_n <= P_{*n\,max}$, how should the voltages $v_{*i}$ at the PV buses be tuned such that the voltages $v_k$ at the PQ buses satisfy $V_{k\,min} <= v_k <= v_{k\,max}$?

The intervals $[P^*_{n\,min}, P_{*n\,max}]$ denote tolerance ranges or uncertainties for the active powers $P_{*n}$ of the PV and PQ buses. The above question defines a so called robust optimization problem. Robust optimization problems are a particular known class of optimization problems allowing for uncertain parameters. They specifically allow the optimization of first quantities, here the voltages $v_{*i}$ of the PV buses, satisfying given constraints, here the voltages $v_k$ of the PQ buses, for a whole domain of uncertain second quantities, here the active power loads $P_{*n}$ of PV and PQ buses. The constraints are often denoted as robust optimization constraints and the domain of uncertain second quantities is often denoted as uncertainty or robust optimization uncertainty.

According to a first exemplary embodiment of the invention the power grid comprises a transmission grid. In transmission grids, the power lines are mainly inductive, i.e. $x_{ik} \gg r_{ik}$. Therefore, the power flow equations (2b) can be simplified to

$$P_i = \sum_{k \in \mathcal{N}_i} \left[ \frac{v_i v_k}{x_{ik}} \sin(\theta_i - \theta_k) \right] \qquad (3)$$

which can be further simplified into DC, i.e. direct current, power flow equations using $\sin(x) \approx x$ for small phase differences $|\theta_i - \theta_k|$:

$$P_i = \sum_{k \in \mathcal{N}_i} \left[ \frac{v_i v_k}{x_{ik}} (\theta_i - \theta_k) \right] \qquad (4)$$

or in vector form

$$P = H\theta, \qquad (5)$$

where $P$, $\theta$ are the vectors of $P_i$, $\theta_i$ and $H$ is a Laplacian matrix with off-diagonal elements $-(v_i^* v_k)/x_{ik}$ and

$$\sum_{k \in \mathcal{N}_i} \frac{v_i v_k}{x_{ik}}$$

on the diagonal. Apparently, H has an eigenvalue 0 and is therefore not invertible. Yet, if $1^T P = 0$ is satisfied, then $\theta = H^+ P$ solves (5) for given P where $H^+$ is the pseudo-inverse of H.

For the PV buses as well as for the PQ buses, the active power is given by P*. Since the power lines are purely inductive, there is no active power loss in the transmission grid and, therefore, the active power supply of the slack node can be obtained from $1^T P = 0$. If P* is defined as an $N_G+N_L-1$ dimensional vector, i.e. as a vector with one dimension less than P, with one element for each PV and PQ bus, then we have

$$P = M P_* = \begin{pmatrix} -1^T \\ \mathbb{I} \end{pmatrix} P_*, \qquad (6)$$

where $\mathbb{I}$ is the identity matrix. For the phase angles we obtain

$$\theta = H^\dagger M P_*. \qquad (7)$$

In order to determine estimates of the voltages at the PQ buses, a result from the paper "A DC power flow extension" by T. Kyriakidis, R. Cherkaoui, and M. Kaya, in "4th IEEE PES Innovative Smart Grid Technologies (ISGT) Europe", 2013 may be used. That so called P-inv approximation is based on the DC power flow (5) assuming mainly inductive power lines to estimate the voltage phase angles. Then, the voltage levels at all buses are estimated based on an approximated AC power flow considering both inductive and resistive parameters of the power lines. This condition states

$$A_P \delta v = b_P, \qquad (8)$$

where $\delta v = v - v_b$ is the absolute offset of the voltage at each bus from a base voltage $v_b$. This base voltage is v* for PV and slack buses, i.e. $\delta v = 0$ for those buses, and the base voltage corresponds to the reference voltage for PQ buses. The other parameters are

$$A_P = G^+ + \text{diag}(P^+) \tag{9}$$

$$b_P = P^+ + G^+ v_b, \tag{10}$$

where $P^+$ is a vector with elements $P^+_i = P_i^* \cos \theta_i + Q_i^* \sin \theta_i$ and $G^+$ is a matrix with elements $G^+_{ik} = G_{ik}^* \cos \theta_k + B_{ik}^* \sin \theta_k$, where $G_{ik} = r_{ik}/(r_{ik}^2 + x_{ik}^2)$ and $B_{ik} = -x_{ik}/(r_{ik}^2 + x_{ik}^2)$. These equalities are approximated for small phases $|\theta_i|$ as follows

$$G^+_{ik} \approx G_{ik} + B_{ik}\theta_k \tag{11}$$

$$P^+_i \approx P_i + Q_i\theta_i. \tag{12}$$

A further linearization can be used around typical values for $\theta_i$ that leads to more accurate results of the phase angles $\theta_i$. The phase angles $\theta_i$ may be different from zero but the variation of the $\theta_i$ depending on $P^*$ may be assumed to be small. Thus, we rewrite (8) using (7) and (6) in the following form

$$\left(G + B\text{diag}(H^\dagger M P_*) + \text{diag}(M P_* + \text{diag}(H^\dagger M P_*)Q)\right) \delta v$$
$$= M P_* + \text{diag}(H^\dagger M P_*)Q - (G + B\text{diag}(H^\dagger M P_*))v_b. \tag{13}$$

Coming back to the question above, we replace $v^*$ of the PV buses by $v_b + \Delta v$, where $v_b$ is the reference or base voltage and $\Delta v$ is an offset to be tuned. Thus, we obtain

$$\underbrace{\left(G + B\text{diag}(H^\dagger M P_*) + \text{diag}\left(\left(\mathbb{I} + \text{diag}(Q)H^\dagger\right) M P_*\right)\right)}_{A(P_*)} \delta v$$
$$= \underbrace{\left(\mathbb{I} + \text{diag}(Q)H^\dagger\right) M P_* - (G + B\text{diag}(H^\dagger M P_*))(v_b + \Delta v)}_{b(P_*, \Delta v)} . \tag{14}$$

This equality constraint contains the known parameters G, B, H, M, and $v_b$. We are interested in the $\delta v$ of the PQ buses. For these lines in (14), the elements of Q only depend on the PQ buses. Thus, also the relevant elements of Q are known. The uncertain vector $P^*$ enters linearly in the equation and the uncertainty is constrained by a convex polytope. Therefore, all admissible vectors $P_*$ can be investigated by analyzing a finite set of corner points of the convex polytope. Furthermore, the control variables $\Delta v$ and the constraint output variables $\delta v$ enter linearly in the constraint. Therefore, the above relation leads to a linear programming problem that can be solved easily using standard solution algorithms like interior-point methods or the known simplex algorithm.

The above steps may be summarized in the following exemplary linear programming problem that minimizes the largest voltage offset $\Delta v$ of all PV buses.

$$\min_{\Delta v} \|\Delta v\|_\infty \tag{15a}$$

$$\text{s.t.} v_b + A(P_*)^{-1} b(P_*, \Delta v) < v_{max} \,\forall P_* \in \{P_{min}, P_{max}\} \tag{15b}$$

$$v_b - A(P_*)^{-1} b(P_*, \Delta v) > v_{min} \,\forall P_* \in \{P_{min}, P_{max}\}, \tag{15c}$$

where $\|\cdot\|_\infty$ denotes the infinity norm, i.e. the maximal absolute value, and $\{P_{min}, P_{max}\}$ specifies the corner points of the polytope that encloses all admissible $P^*$. As usual, the abbreviation "s.t." means "such that" and denotes the constraints of the minimization.

According to a second exemplary embodiment of the invention the power grid comprises a distribution grid. In contrast to transmission grids according to the first embodiment, the power lines may not be assumed to be purely inductive in distribution grids. With the latter, the ratio $r_{ik}/x_{ik}$ may even be close to 1 or above 1.

For distribution grids, we also start from the AC power flow equations (2). We describe the $r_{ik}/x_{ik}$ ratio by the phase of the complex impedance $z_{ik} = r_{ik} + j*x_{ik} = z_{ik}*\exp(j*\Phi_{ik})$, where $\Phi_{ik}=\tan(x_{ik}/r_{ik})$. It follows that $r_{ik}/(r_{ik}^2+x_{ik}^2)=\cos(\Phi_{ik})/z_{ik}$ and $x_{ik}/(r_{ik}^2+x_{ik}^2)=\sin(\Phi_{ik})/z_{ik}$. With that we obtain

$$\begin{pmatrix} P_i \\ Q_i \end{pmatrix} = v_i \sum_{k \in \mathcal{N}_i} \frac{1}{z_{ik}} \begin{pmatrix} \sin \phi_{ik} & \cos \phi_{ik} \\ -\cos \phi_{ik} & \sin \phi_{ik} \end{pmatrix} \begin{pmatrix} v_k \sin(\theta_i - \theta_k) \\ v_i - v_k \cos(\theta_i - \theta_k) \end{pmatrix}. \qquad (16)$$

In order to find an appropriate solution of (16), the following simplifications are advantageous:

- The phase differences are rather small, i.e. it can be assumed that $\sin(\theta_i-\theta_k) \approx \theta_i-\theta_k$ and $\cos(\theta_i-\theta_k) \approx 1$,
- The variation of the voltages $v_i$ is negligible compared to the voltage differences between adjacent buses, i.e. $v_i-v_k$ dominates the variation of the individual $v_i$. This allows to replace some voltages by a nominal voltage $v_N$, i.e. it can be assumed that $v_i \approx v_N$,
- The shunt capacitors of the power lines may be neglected, i.e. $b_{ik} \approx 0$. Because of this assumption, the reactive power for the shunt capacitors can be added to $Q_i$ as additional constant reactive power load.

With the above simplifications a linearized power flow equations can be derived

$$\begin{pmatrix} P_i \\ Q_i \end{pmatrix} = v_N \sum_{k \in \mathcal{N}_i} \frac{1}{z_{ik}} \begin{pmatrix} \sin \phi_{ik} & \cos \phi_{ik} \\ -\cos \phi_{ik} & \sin \phi_{ik} \end{pmatrix} \begin{pmatrix} v_N(\theta_i - \theta_k) \\ v_i - v_k \end{pmatrix}. \qquad (17)$$

The active power part of this linearized power flow equation falls back to the DC power flow equation for purely inductive powerlines, i.e. $\Phi_{ik}=\pi/2$. However, these equations are also valid for distribution grids. Note that the above simplifications have turned the power grid into a loss-less power grid model because the active and reactive power flowing into each power line is equal to the power flow that leaves this power line at the other end.

Equation (16) may be rewritten in matrix form

$$\begin{pmatrix} P \\ Q \end{pmatrix} = v_N \begin{pmatrix} Bv_N & G \\ -Gv_N & B \end{pmatrix} \begin{pmatrix} \theta \\ v \end{pmatrix}, \qquad (18)$$

where G is a matrix with elements

-    $g_{ik} = -r_{ik}/(r_{ik}^2+x_{ik}^2)= -\cos(\Phi_{ik})/z_{ik}$ on the off-diagonal and $\sum_{k \in \mathcal{N}_i} g_{ik}$ on the diagonal. Similarly, B is a matrix with elements

-    $b_{ik} = -x_{ik}/(r_{ik}^2+x_{ik}^2)= -\sin(\Phi_{ik})/z_{ik}$ on the off-diagonal and $\sum_{k \in \mathcal{N}_i} b_{ik}$ on the diagonal.

B and G are symmetric matrices and satisfy $1^T B=B*1=0$ and $1^T G=G*1=0$. Hence, B and G are not invertible, but $1^T P=0$ and $1^T Q=0$ is fulfilled. This shows again that the above power grid model is loss-less.

Coming back to the question above, we consider a power grid with one slack bus, $N_G-1$ PV buses, and $N_L$ PQ buses. Without loss of generality, it may be assumed that the first bus (i=1) is the slack bus, i.e. $\theta_1=0$ and $P_1 = -\sum_{i=2}^N P_i$, the buses 2 to $N_G$ are PV buses, and buses $N_G+1$ to $N=N_G+N_L$ are PQ buses. With this assumption, the first row and the first column of (18) may be removed in order to obtain

$$\begin{pmatrix} \tilde{P} \\ Q \end{pmatrix} = v_N \begin{pmatrix} \tilde{B}v_N & \tilde{G} \\ -\tilde{G}^T v_N & B \end{pmatrix} \begin{pmatrix} \tilde{\theta} \\ v \end{pmatrix}, \qquad (19)$$

where $\tilde{P}= \text{vec}(P_2,...,P_N)$, $\tilde{\theta}= \text{vec}(\theta_2,...,\theta_N)$, $\tilde{B}$ corresponds to B with the first row and column removed, and $\tilde{G}$ corresponds to G with the first row removed. Now, $\tilde{B}$ is invertible which can be shown, e.g. using Gershgorin's disc theorem. Thus, we may use Schur complement to remove $\tilde{\theta}$ from the above equation system and get

$$v_N(B + \tilde{G}^T \tilde{B}^{-1} \tilde{G}) \begin{pmatrix} v_G \\ v_L \end{pmatrix} = \begin{pmatrix} Q_G \\ Q_L \end{pmatrix} + \tilde{G}^T \tilde{B}^{-1} \tilde{P}, \qquad (20)$$

where we separate v into the known elements of the slack and PV buses $v_G$ and the unknown values of the PQ buses $v_L$. Similarly, we split Q into the unknown elements of the slack and the PV buses $Q_G$ and the known values of the PQ buses $Q_L$. Since we are interested in the unknown $v_L$ but less interested in the unknown $Q_G$, we may only consider the last $N_L$ equations where $\tilde{P}$ and $Q_L$ is known and $v_G$ is to be optimized in order to achieve $v_{min}$ <= $v_L$ <= $v_{max}$. Since both $\tilde{P}$ and $Q_L$ enter linearly, the constraint can be extended to a design constraint for $v_G$, $Q_L$, and $\tilde{P}$ or a robust constraint for uncertain $Q_L$ and $\tilde{P}$.

The above procedure related to distribution grids according to the second embodiment may be summarized in the following exemplary linear programming problem that minimizes the largest voltage offset $v_G$ - $v_N$*1 from the nominal voltages $v_N$ of all PV buses.

$$\min_{v_G} \| v_G - v_N 1 \|_\infty \qquad (21a)$$

$$\text{s.t.} \{(B + \tilde{G}^T \tilde{B}^{-1} \tilde{G})\}_{22}^{-1} \left( -\{(B + \tilde{G}^T \tilde{B}^{-1} \tilde{G})\}_{12} v_G + \frac{1}{v_N} \left( Q_L + \{\tilde{G}^T \tilde{B}^{-1}\}_2 \tilde{P} \right) \right)$$

$$< v_{max} \ \forall \tilde{P} \in \{P_{min}, P_{max}\}, Q_L \in \{Q_{min}, Q_{max}\} \qquad (21b)$$

$$\{(B + \tilde{G}^T \tilde{B}^{-1} \tilde{G})\}_{22}^{-1} \left( -\{(B + \tilde{G}^T \tilde{B}^{-1} \tilde{G})\}_{12} v_G + \frac{1}{v_N} \left( Q_L + \{\tilde{G}^T \tilde{B}^{-1}\}_2 \tilde{P} \right) \right)$$

$$> v_{min} \ \forall \tilde{P} \in \{P_{min}, P_{max}\}, Q_L \in \{Q_{min}, Q_{max}\}, \qquad (21c)$$

where $\{P_{min}, P_{max}\}$ and $\{Q_{min}, Q_{max}\}$ denote the corner points of the polytope that encloses all admissible $\tilde{P}$ and Q. Moreover, for a matrix X the notation $\{X\}_{12}$ and $\{X\}_{22}$ specifies the lower left $N_L$*$N_G$ and lower right $N_L$*$N_L$ block of the matrix X and $\{X\}_2$ denotes the lower $N_L$*N block of the matrix X.

The embodiments as described above illustrate the advantages of the invention. In particular, the invention allows for a direct optimization of the controllable voltage levels, an incorporation of uncertain active and reactive power supply and demand, and a formulation as a linear programming problem. The latter allows for a fast solution even for a great number of optimization variables.

## Claims

1. Method for controlling a voltage in a power grid comprising a PV bus (PV1, PV2) and a PQ bus (PQ1,...,PQ3), the method comprising:

   a) receiving a first tolerance range for an active power of the PV bus (PV1, PV2) and a second tolerance range for an active power of the PQ bus (PQ1,...,PQ3),
   b) receiving a first value for a reactive power (Q) of the PQ bus (PQ1,...,PQ3),
   c) running, by a processor, a robust optimization process for a set of power flow equations combining values for active powers, reactive powers, and voltages of the PV bus (PV1, PV2) and the PQ bus (PQ1,...,PQ3),
   d) inputting the first and second tolerance range and the first reactive power value (Q) to the robust optimization process using the first and second tolerance range as robust optimization uncertainty,
   e) determining by the robust optimization process a voltage set point ($v_{st}$) for the PV bus (PV1, PV2) so that the set of power flow equations is fulfilled for the first and second tolerance range, and
   f) controlling a voltage at the PV bus (PV1, PV2) according to the determined voltage set point ($v_{st}$), wherein

      - a third tolerance range for a voltage of the PQ bus (PQ1,...,PQ3) is received,

- the third tolerance range is input to the robust optimization process as a robust optimization constraint, and
- the voltage set point ($v_{st}$) is determined so that the robust optimization constraint is satisfied for the first and second tolerance range.

2. Method according to claim 1, wherein

a) a nominal value for a voltage of the PQ bus (PQ1,...,PQ3) is received,
b) the nominal value is input to the robust optimization process taking a difference between the nominal value and an actual voltage of the PQ bus into account in a robust optimization cost function, and
c) the voltage set point ($v_{st}$) is determined so that the robust optimization cost function is minimized for the first and second tolerance range.

3. Method according to one of the preceding claims, wherein the robust optimization process minimizes a deviation of the voltage set point ($v_{st}$) from a nominal voltage of the PV bus (PV1, PV2).

4. Method according to one of the preceding claims, wherein the first tolerance range is received from a conventional power generator (G) or a high voltage direct current terminal at the PV bus (PV1, PV2) and/or the second tolerance range and the first reactive power value (Q) are received from a renewable power generator (W) or a load device (L) at the PQ bus (PQ1,...,PQ3).

5. Method according to one of the preceding claims, wherein the voltage set point ($v_{st}$) is transmitted to a conventional power generator (G), a high voltage direct current terminal, and/or a flexible AC transmission system at the PV bus (PV1, PV2).

6. Method according to one of the preceding claims, wherein the set of power flow equations comprise a linearized power flow equation.

7. Method according to claim 4, wherein for a transmission grid the linearization of the linearized power flow equation is based on

a) neglecting a resistance of a power line of the transmission grid compared to an inductivity of the power line and/or
b) linearizing a phase angle difference between neighboring buses.

8. Method according to claim 4 or 5, wherein for a distribution grid the linearization of the linearized power flow equation is based on

a) neglecting a deviation of a voltage value from a nominal voltage of the PV bus (PV1, PV2) or PQ bus (PQ1,...,PQ3) compared to a voltage difference between neighboring buses and/or
b) linearizing a phase angle difference between neighboring buses.

9. Method according to one of the preceding claims, wherein
the robust optimization process is a linear robust optimization process based on a linear programming routine.

10. Controller (CTL) for controlling a voltage in a power grid comprising a PV bus (PV1, PV2) and a PQ bus (PQ1,...,PQ3), the controller (CTL) being configured to perform a method according to one of the preceding claims.

11. Computer program product for controlling a voltage in a power grid comprising a PV bus (PV1, PV2) and a PQ bus (PQ1,...,PQ3), the computer program product being adapted to perform a method according to one of the claims 1 - 7.

**Patentansprüche**

1. Verfahren zur Steuerung einer Spannung in einem Stromnetz, das einen PV-Bus (PV1, PV2) und einen PQ-Bus (PQ1, ..., PQ3) umfasst, wobei das Verfahren umfasst:

a) Empfangen eines ersten Toleranzbereichs für eine Wirkleistung des PV-Busses (PV1, PV2) und eines zweiten Toleranzbereichs für eine Wirkleistung des PQ-Busses (PQ1, ..., PQ3),

b) Empfangen eines ersten Wertes für eine Blindleistung (Q) des PQ-Busses (PQ1, ..., PQ3),

c) Ausführen, durch einen Prozessor, eines robusten Optimierungsprozesses für einen Satz von Leistungsflussgleichungen, die Werte für Wirkleistungen, Blindleistungen und Spannungen des PV-Busses (PV1, PV2) und des PQ-Busses (PQ1, ..., PQ3) kombinieren,

d) Eingeben des ersten und zweiten Toleranzbereichs und des ersten Blindleistungswertes (Q) in den robusten Optimierungsprozess unter Verwendung des ersten und zweiten Toleranzbereichs als Unsicherheit der robusten Optimierung,

e) Bestimmen, durch den robusten Optimierungsprozess, eines Spannungssollwertes ($v_{st}$) für den PV-Bus (PV1, PV2), so dass der Satz von Leistungsflussgleichungen für den ersten und zweiten Toleranzbereich erfüllt ist, und

f) Steuern einer Spannung am PV-Bus (PV1, PV2) gemäß dem bestimmten Spannungssollwert ($v_{st}$), wobei

- ein dritter Toleranzbereich für eine Spannung des PQ-Busses (PQ1, ..., PQ3) empfangen wird,
- der dritte Toleranzbereich in den robusten Optimierungsprozess als eine Nebenbedingung der robusten Optimierung eingegeben wird, und
- der Spannungssollwert ($v_{st}$) so bestimmt wird, dass die Nebenbedingung der robusten Optimierung für den ersten und zweiten Toleranzbereich erfüllt ist.

2. Verfahren nach Anspruch 1, wobei

a) ein Nennwert für eine Spannung des PQ-Busses (PQ1, ..., PQ3) empfangen wird,

b) der Nennwert in den robusten Optimierungsprozess eingegeben wird, unter Berücksichtigung einer Differenz zwischen dem Nennwert und einem Istwert des PQ-Busses in einer Kostenfunktion der robusten Optimierung, und

c) der Spannungssollwert ($v_{st}$) so bestimmt wird, dass die Kostenfunktion der robusten Optimierung für den ersten und zweiten Toleranzbereich minimiert wird.

3. Verfahren nach einem der vorhergehenden Ansprüche, wobei der robuste Optimierungsprozess eine Abweichung des Spannungssollwertes ($v_{st}$) von einer Nennspannung des PV-Busses (PV1, PV2) minimiert.

4. Verfahren nach einem der vorhergehenden Ansprüche, wobei der erste Toleranzbereich von einem herkömmlichen Stromgenerator (G) oder einem Hochspannungs-Gleichstromanschluss am PV-Bus (PV1, PV2) empfangen wird, und/oder

der zweite Toleranzbereich und der erste Blindleistungswert (Q) von einem Generator erneuerbarer Energie (W) oder einer Lastvorrichtung (L) am PQ-Bus (PQ1, ..., PQ3) empfangen werden.

5. Verfahren nach einem der vorhergehenden Ansprüche, wobei der Spannungssollwert ($v_{st}$) zu einem herkömmlichen Stromgenerator (G), einem Hochspannungs-Gleichstromanschluss und/oder einem flexiblen AC-Übertragungssystem am PV-Bus (PV1, PV2) übertragen wird.

6. Verfahren nach einem der vorhergehenden Ansprüche, wobei der Satz von Leistungsflussgleichungen eine linearisierte Leistungsflussgleichung umfasst.

7. Verfahren nach Anspruch 4, wobei für ein Übertragungsnetz die Linearisierung der linearisierten Leistungsflussgleichung auf

a) dem Vernachlässigen eines Widerstands einer Stromleitung des Übertragungsnetzes gegenüber einer Induktivität der Stromleitung und/oder

b) dem Linearisieren einer Phasenwinkeldifferenz zwischen benachbarten Bussen basiert.

8. Verfahren nach Anspruch 4 oder 5, wobei für ein Verteilungsnetz die Linearisierung der linearisierten Leistungsflussgleichung auf

a) dem Vernachlässigen einer Abweichung eines Spannungswertes von einer Nennspannung des PV-Busses (PV1, PV2) oder PQ-Busses (PQ1, ..., PQ3) gegenüber einer Spannungsdifferenz zwischen benachbarten Bussen und/oder

b) dem Linearisieren einer Phasenwinkeldifferenz zwischen benachbarten Bussen basiert.

9. Verfahren nach einem der vorhergehenden Ansprüche, wobei der robuste Optimierungsprozess ein linearer robuster Optimierungsprozess ist, der auf einer Routine der linearen Programmierung basiert.

10. Steuereinrichtung (CTL) zum Steuern einer Spannung in einem Stromnetz, das einen PV-Bus (PV1, PV2) und einen PQ-Bus (PQ1, ..., PQ3) umfasst, wobei die Steuereinrichtung (CTL) dafür eingerichtet ist, ein Verfahren nach einem der vorhergehenden Ansprüche auszuführen.

11. Computerprogrammprodukt zum Steuern einer Spannung in einem Stromnetz, das einen PV-Bus (PV1, PV2) und einen PQ-Bus (PQ1, ..., PQ3) umfasst, wobei das Computerprogrammprodukt dafür ausgelegt ist, ein Verfahren nach einem der Ansprüche 1 bis 7 auszuführen.

**Revendications**

1. Un procédé de régulation d'une tension dans un réseau électrique comprenant un bus PV (PV1, PV2) et un bus PQ (PQ1, ..., PQ3), le procédé comprenant :

   a) la réception d'une première plage de tolérance destinée à une puissance active du bus PV (PV1, PV2) et d'une deuxième plage de tolérance destinée à une puissance active du bus PQ (PQ1, ..., PQ3),
   b) la réception d'une première valeur destinée à une puissance réactive (Q) du bus PQ (PQ1, ..., PQ3),
   c) l'exécution, par un processeur, d'un procédé d'optimisation robuste destiné à un ensemble d'équations de flux de puissance combinant des valeurs destinées à des puissances actives, des puissance réactives et des tensions du bus PV (PV1, PV2) et du bus PQ (PQ1, ..., PQ3),
   d) l'entrée des première et deuxième plages de tolérance et de la première valeur de puissance réactive (Q) dans le procédé d'optimisation robuste au moyen des première et deuxième plages de tolérance en tant qu'incertitude d'optimisation robuste,
   e) la détermination par le procédé d'optimisation robuste d'un point de consigne de tension ($v_{st}$) destiné au bus PV (PV1, PV2) de sorte que l'ensemble d'équations de flux de puissance soit satisfait pour les première et deuxième plages de tolérance, et
   f) la régulation d'une tension au niveau du bus PV (PV1, PV2) en fonction du point de consigne de tension déterminé ($v_{st}$), dans laquelle

      - une troisième plage de tolérance destinée à une tension du bus PQ (PQ1, ..., PQ3) est reçue,
      - la troisième plage de tolérance est entrée dans le procédé d'optimisation robuste en tant que contrainte d'optimisation robuste, et
      - le point de consigne de tension ($v_{st}$) est déterminé de sorte que la contrainte d'optimisation robuste soit satisfaite pour les première et deuxième plages de tolérance.

2. Le procédé selon la revendication 1 dans lequel

   a) une valeur nominale destinée à une tension du bus PQ (PQ1, ..., PQ3) est reçue,
   b) la valeur nominale est entrée dans le procédé d'optimisation robuste en prenant en compte une différence entre la valeur nominale et une tension réelle du bus PQ dans une fonction de coût d'optimisation robuste, et
   c) le point de consigne de tension ($v_{st}$) est déterminé de sorte que la fonction de coût d'optimisation robuste soit minimisée pour les première et deuxième plages de tolérance.

3. Le procédé selon l'une quelconque des revendications précédentes, dans lequel le procédé d'optimisation robuste minimise un écart du point de consigne de tension ($v_{st}$) à partir d'une tension nominale du bus PV (PV1, PV2).

4. Le procédé selon l'une quelconque des revendications précédentes, dans lequel la première plage de tolérance est reçue à partir d'un générateur de courant électrique conventionnel (G) ou d'une borne de courant continu à haute tension au niveau du bus PV (PV1, PV2) et/ou
la deuxième plage de tolérance et la première valeur de puissance réactive (Q) sont reçues à partir d'un générateur de courant électrique renouvelable (W) ou d'un dispositif de charge (L) au niveau du bus PQ (PQ1, ..., PQ3).

5. Le procédé selon l'une quelconque des revendications précédentes, dans lequel le point de consigne de tension ($v_{st}$) est transmis à un générateur de courant électrique conventionnel (G), une borne de courant continu à haute tension et/ou un système de transmission à c.a. flexible au niveau du bus PV (PV1, PV2).

**6.** Le procédé selon l'une quelconque des revendications précédentes, dans lequel l'ensemble d'équations de flux de puissance comprend une équation de flux de puissance linéarisée.

**7.** Le procédé selon la revendication 4, dans lequel, pour un réseau de transmission, la linéarisation de l'équation de flux de puissance linéarisée est basée sur

a) l'ignorance d'une résistance d'une ligne électrique du réseau de transmission en comparaison d'une inductivité de la ligne électrique et/ou
b) la linéarisation d'une différence d'angle de phase entre bus voisins.

**8.** Le procédé selon la revendication 4 ou 5, dans lequel, pour un réseau de distribution, la linéarisation de l'équation de flux de puissance linéarisée est basée sur

a) l'ignorance d'un écart d'une valeur de tension à partir d'une tension nominale du bus PV (PV1, PV2) ou du bus PQ (PQ1, ..., PQ3) en comparaison d'une différence de tension entre bus voisins et/ou
b) la linéarisation d'une différence d'angle de phase entre bus voisins.

**9.** Le procédé selon l'une quelconque des revendications précédentes, dans lequel le procédé d'optimisation robuste est un procédé d'optimisation robuste linéaire basé sur une routine de programmation linéaire.

**10.** Un dispositif de commande (CTL) destiné à la régulation d'une tension dans un réseau électrique comprenant un bus PV (PV1, PV2) et un bus PQ (PQ1, ..., PQ3), le dispositif de commande (CTL) étant configuré de façon à exécuter un procédé selon l'une quelconque des revendications précédentes.

**11.** Un produit de programme informatique destiné à la régulation d'une tension dans un réseau électrique comprenant un bus PV (PV1, PV2) et un bus PQ (PQ1, ..., PQ3), le produit de programme informatique étant adapté de façon à exécuter un procédé selon l'une quelconque des revendications 1 à 7.

# FIG 1

PQ1

PV1

G

PL

L

Q

$V_{min}, V_{max}$
$P_{min}, P_{max}$

PL

PV2

G

$V_{st}$

CTL

$V_{st}$

PL

$P_{min}, P_{max}$
$V_{min}, V_{max}$

$P_{min}, P_{max}$
$V_{min}, V_{max}$

PQ3

W

Q

$V_{min}, V_{max}$
$P_{min}, P_{max}$

Q

$V_{min}, V_{max}$
$P_{min}, P_{max}$

PQ2

L

PL

PL

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHANWIT BOONCHUAY et al.** Robust optimization-based DC optimal power flow for managing wind generation uncertainty. *AIP CONFERENCE PROCEEDINGS,* 01 January 2012, 31-35

- **T. KYRIAKIDIS ; R. CHERKAOUI ; M. KAYA.** A DC power flow extension. *4th IEEE PES Innovative Smart Grid Technologies (ISGT) Europe,* 2013